# EUROPEAN PATENT APPLICATION

(11) **EP 1 313 101 A2**
(43) Date of publication of application: **21.05.2003**
(21) Application number: 02025545.1
(22) Date of filing: 14.11.2002
(51) Int. Cl.: G11B 19/12, G11B 7/09

(54) **Type distinction method of optical disk and optical disk apparatus using the method**

(30) Priority: 16.11.2001 JP 2001351890; 28.06.2002 JP 2002190566
(71) Applicant: VICTOR COMPANY OF JAPAN, LTD., Yokohama-Shi, Kanagawa-Ken (JP)
(72) Inventor: Nishizawa, Akira, Yokohama-shi, Kanagawa-ken (JP); Hayami, Atsushi, Yokohama-shi, Kanagawa-ken (JP)
(74) Representative: HOFFMANN - EITLE

(57) **Abstract**

There is disclosed an optical disk apparatus (50A) to which a CD (10), DVD (20), and extra high density optical disk (30) capable of recording/reproducing an information signal with a density higher than that of the CD (10) or DVD (20) are selectively attachable. The attached optical disk is irradiated with a laser beam (L1) for the CD from an optical pickup (51) for the CD/DVD. A focus error signal (FE1) is detected based on a return light from a signal surface, and the attached optical disk is judged to be the extra high density optical disk (30) when an amplitude of the focus error signal (FE1) is not more than a predetermined value. When the attached optical disk is judged to be the CD (10) or DVD (20), a tracking error signal (TE1) is detected based on the return light from the signal surface. When the amplitude of the tracking error signal (TE1) is not less than another predetermined value, the attached optical disk is judged to be the CD (10).

## Description

### BACKGROUND OF THE INVENTION

### 1. Technical Field of the Invention

The present invention relates to a type distinction method of an optical disk in which an optical pickup disposed in an optical disk apparatus is used to identify a type of an optical disk, and the optical disk apparatus in which the method is used.

### 2. Description of the Related Art

In general, in an optical disk, information signals such as video information, sound information, and computer data are recorded on a track formed in a disc-shaped disk substrate in a spiral or concentric form with a high density. Moreover, to reproduce the information from the recorded track, a desired track can be accessed at a high speed. Therefore, the optical disk has frequently been used.

In this case, the optical disk can roughly be divided into a type exclusive for reproduction and a recordable/reproducible type. Here, in the optical disk of the type exclusive for reproduction, a resin material is used to form the track in the spiral or concentric form with a concave/convex pit string on the disc-shaped disk substrate by injection molding. A reflective film of aluminum is formed on the concave/convex pit string to form a signal surface. On the other hand, for the optical disk of the recordable/reproducible type, the resin material is used to form the track in the spiral or concentric form beforehand with concave/convex grooves and lands on the disc-shaped disk substrate by injection molding. Recording and reflective films are formed in order on these grooves and lands to form a surface for signal.

Moreover, for the optical disk of the type exclusive for reproduction, the signal surface is irradiated with laser beams for reproduction emitted from the optical pickup disposed so that the pickup can be moved in a diametric direction of the optical disk in the optical disk apparatus via an objective lens. A return light reflected from the signal surface is detected by a photodetector and reproduced. On the other hand, laser beams for recording emitted from the optical pickup disposed so as to be movable in the diametric direction of the optical disk in the optical disk apparatus via the objective lens are used to record the information in the signal surface. Thereafter, the information is reproduced from the recorded signal surface with the laser beams for reproduction similarly as described above.

Among the above-described optical disks, examples of a compact disc (CD) include: a disc exclusive for reproduction in which music information is recorded beforehand; a CD-read only memory (CD-ROM) exclusive for reproduction in which computer data is recorded beforehand; and a recordable/reproducible CD-recordable (CD-R) in which an information signal can be recorded only once. These optical disks are handled as CD because a single disk substrate having a disk substrate thickness of 1.2 mm is used.

On the other hand, examples of a digital versatile disc (DVD) whose recording density is higher than the density of CD include: a disc exclusive for reproduction in which digitized and compressed video or sound is reproduced; a DVD-read only memory (DVD-ROM) exclusive for reproduction in which the computer data is recorded beforehand; a recordable/reproducible DVD-recordable (DVD-R) in which the information signal can be recorded only once; a recordable/reproducible DVD-rewritable (DVD-RW) in which the information signal can be recorded a plurality of times; and DVD-random access memory or DVD-writable (DVD-RAM). These optical disks are handled as DVD because two disk substrates each having a disk substrate thickness of 0.6 mm are attached to each other for use.

Furthermore, in recent years, in order to further increase the density of the optical disk, an extra high density optical disk has actively been developed in which the information signal can be recorded with an extra high density as compared with CD and DVD.

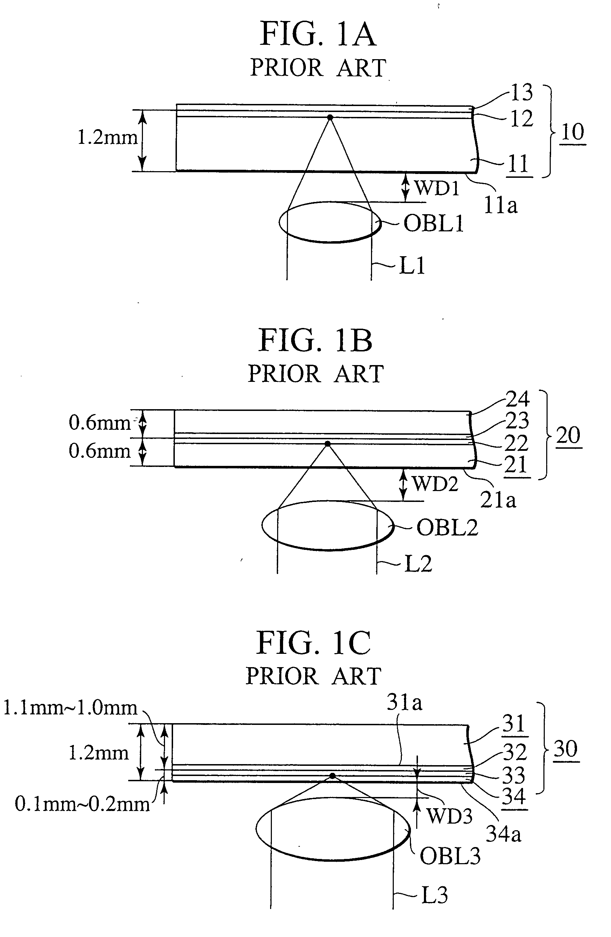

FIGS.1A to 1C are diagrams schematically showing that the CD, DVD, and extra high density optical disk are played in the optical disk apparatus.

Additionally, as described above, the signal surface formed on the optical disk is of the type exclusive for reproduction or of the recordable/reproducible type. In the following description, a reproduction time will mainly be described, because the laser beams for reproduction are used in detecting the type of the optical disk.

First, in a compact disc (CD) 10 shown in FIG.1A, a transparent resin material is used to form a transparent disk substrate 11 in a disc shape which has a diameter of 120 mm, central hole diameter of 15 mm, and disk substrate thickness of 1.2 mm. A signal surface 12 is formed on the transparent disk substrate 11 with a broadened track pitch. Furthermore, a protective film 13 is formed on the signal surface 12.

Moreover, to play the CD 10 by the optical pickup (not shown) in the optical disk apparatus, the signal surface 12 is irradiated with a laser beam L1 with a wavelength of 780 nm focused on an objective lens OBL1 having a numerical aperture (NA) of 0.45 from a side of a laser beam incidence surface 11a of the transparent disk substrate 11. A return light reflected by the signal surface 12 is used to reproduce a signal recorded in the signal surface 12.

Here, the signal surface 12 formed on the side of the transparent disk substrate 11 is in a position of about 1.2 mm from the laser beam incidence surface 11a of the transparent disk substrate 11. When the laser beam L1 from the objective lens OBL1 with NA of 0.45 is focused on the signal surface 12, a working distance WD1 between the objective lens OBL1 and the laser beam incidence surface 11a of the transparent disk substrate 11 is about 1 mm.

Next, for a DVD 20 shown in FIG.1B, a transparent disk substrate 21 using a transparent resin material, and a disk substrate for reinforcement 24 using a resin material are each formed in a disc shape which has a diameter of 120 mm, central hole diameter of 15 mm, and disk substrate thickness of 0.6 mm. When these disk substrates 21, 24 are attached to each other, a total disk substrate thickness is 1.2 mm. In this case, a signal surface 22 is formed on the transparent disk substrate 21 with a track pitch smaller than that of the CD 10. Furthermore, the disk substrate for reinforcement 24 is formed on the signal surface 22 via an adhesive layer 23.

Furthermore, to play the DVD 20 by the optical pickup (not shown) in the optical disk apparatus, the signal surface 22 is irradiated with a laser beam L2 with a wavelength of 635 nm focused on an objective lens OBL2 having a numerical aperture (NA) of 0.6 from a laser beam incidence surface 21a side of the transparent disk substrate 21. A return light reflected by the signal surface 22 is used to reproduce a signal recorded in the signal surface 22.

Here, the signal surface 22 formed on the transparent disk substrate 21 is in a position of about 0.6 mm from the laser beam incidence surface 21a of the transparent disk substrate 21. When the laser beam L2 from the objective lens OBL2 with NA of 0.6 is focused on the signal surface 22, a working distance WD2 between the objective lens OBL2 and the laser beam incidence surface 21a of the transparent disk substrate 21 is about 1 mm.

Next, an extra high density optical disk 30 shown in FIG.1C is in a research stage at present as described above, and general specifications are fixed.

According to the specifications, in the extra high density optical disk 30, a disk substrate 31 using the resin material is formed in a disc shape which has a diameter of 120 mm, central hole diameter of 15 mm, and disk substrate thickness of about 1.1 to 1.0 mm. Moreover, a transparent resin sheet substrate 34 using a transparent resin sheet with a thickness of about 0.1 to 0.2 mm is formed with a diameter of 120 mm which is the same as that of the disk substrate 31, and with a central hole diameter slightly larger than 15 mm. When these substrates 31, 34 are attached to each other, the total disk substrate thickness is 1.2 mm. In this case, a signal surface 32 is formed on one surface 31a of the disk substrate 31 with a track pitch much smaller than that of the DVD. The transparent resin sheet substrate 34 having a thickness of about 0.1 to 0.2 mm is attached onto the signal surface 32 via a transparent adhesive layer 33.

Here, in one specification of a signal system of the extra high density optical disk 30, a lead-in area (prerecord area) is formed on an inner peripheral side in a radius of 22 to 23 mm. Optical disk manufacturing information, optical disk format information, and the like are prerecorded in the lead-in area, and a recording/reproducing area required by a user is formed over a radius of 23 mm to 59 mm on an outer peripheral side from the lead-in area. In this case, the track pitch of the recording/reproducing area is set to 0.32 µm, a substantially half width of the track pitch forms a groove, and the remaining width forms a land. When the surface of the optical disk is viewed from the optical pickup, an area in the vicinity of the optical pickup is defined as the groove, an area apart from the optical pickup is defined as the land, and the information is recorded with respect to the groove.

In this case, a "1,7PP" modulation system referred to as 2T, which is obtained by improving (1, 7) RLL code, is used as a modulation system for recording the information in the above-described method. A shortest mark length in which minimum information is recorded changes between 0.14 µm and 0.17 µm in accordance with a recording capacity of the extra high density optical disk 30, and a recording capacity is in a range of 27 GB to 30 GB with one surface of the optical disk with a diameter of 12 cm.

On the other hand, another specification of the signal system of the extra high density optical disk 30 is referred to as a land groove system. When the surface of the optical disk is viewed from the optical pickup, a groove having a track width of 0.32 µm is formed in the vicinity of the optical pickup, a land having a track width of 0.32 µm is formed apart from the optical pickup, and the information is recorded with respect to the groove and land.

In this case, a "1,7PP" modulation system referred to as 2T, which is obtained by improving (1, 7) RLL code, or "D8/15 modulation" referred to as a 3T system is used as a modulation system for recording the information in the above-described method. The shortest mark length in which the minimum information is recorded is between 0.14 µm and 0.17 µm, and the recording capacity is in a range of 27 GB to 30 GB with one surface of the optical disk with a diameter of 12 cm.

Furthermore, a plurality of information recording layers exist in the extra high density optical disk 30 to which each of the above-described signal systems is applied. When a focal position of the optical pickup for the extra high density optical disk is simply moved to each information recording layer, the recording/reproducing is possible without reversing the extra high density optical disk 30. Types with two, three, four information recording layers have been studied.

Additionally, to play the extra high density optical disk 30 by the optical pickup (not shown) in the optical disk apparatus, the signal surface 32 formed on the disk substrate 31 is irradiated with a laser beam L3 whose wavelength is in the vicinity of 400 nm focused by an objective lens OBL3 having a numerical aperture (NA) of 0.7 to 0.85 from a laser beam incidence surface 34a side of the transparent resin sheet substrate 34. A return light reflected by the signal surface 32 is used to reproduce a signal recorded in the signal surface 32.

Here, the signal surface 32 formed on the transparent disk substrate 31 side is in a position of about 0.1 to 0.2 mm from the laser beam incidence surface 34a of the transparent resin sheet substrate 34. When the laser beam L3 from the objective lens OBL3 with NA of 0.7 to 0.85 is focused on the signal surface 32, a working distance WD3 between the objective lens OBL3 and the laser beam incidence surface 34a of the transparent resin sheet substrate 34 is 0.5 mm or less.

Additionally, the method of forming the signal surface 32 on the disk substrate 31 of the extra high density optical disk 30 by a projection molding method has been described above. Another method comprises: forming the signal surface on the transparent resin sheet substrate 34 side. As not shown, this method comprises: using a known photopolymer molding method (2P method) or compression molding method to charge a transparent resin which hardens by ultraviolet rays onto the transparent resin sheet substrate 34 with a thickness of about 0.1 to 0.2 mm; applying a stamper (not shown) onto the resin; irradiating the transparent resin sheet substrate 34 with ultraviolet rays; forming the pit string for reproduction, or the grooves and lands for recording/reproducing beforehand to form the signal surface; and forming the disk substrate for reinforcement with a thickness of about 1.1 to 1.0 mm on the signal surface via the adhesive layer to form the extra high density optical disk.

Here, the above-described CD 10, and DVD 20 are commercially available. To record and/or reproduce the information with respect to the CD 10, DVD 20 using the optical disk apparatus (not shown), in recent years, the optical disk apparatus has been constituted such that both the CD 10 and DVD 20 can selectively be attached. When a user inserts either the CD 10 or DVD 20 into the optical disk apparatus, the CD 10 or DVD 20 is identified by various disk type distinction methods in the optical disk apparatus. In a method of rotating the CD 10 or DVD 20 in the optical disk apparatus and identifying the type by the optical pickup (not shown) disposed in the apparatus, the constitution of the optical disk apparatus is simple because a specific detector for identifying the disk type is not used.

With respect to the above-described constitution, a conventional example is disclosed in Japanese Patent Application Laid-Open No. 11-250558/1999 in which the optical pickup disposed in the optical disk is used to distinguish the type of the optical disk and thereby the CD 10 and DVD 20 can be identified.

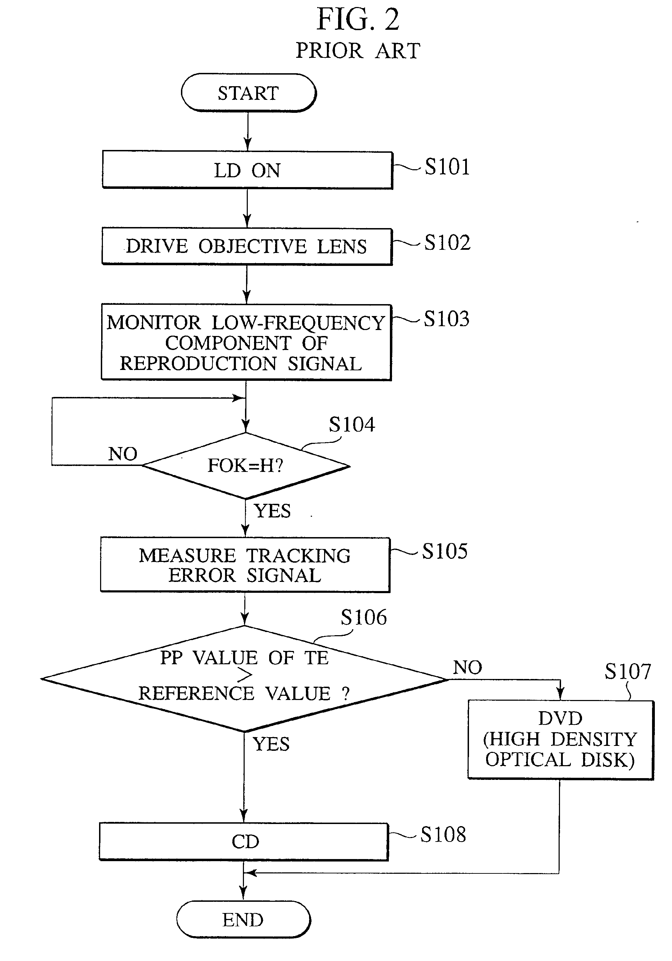

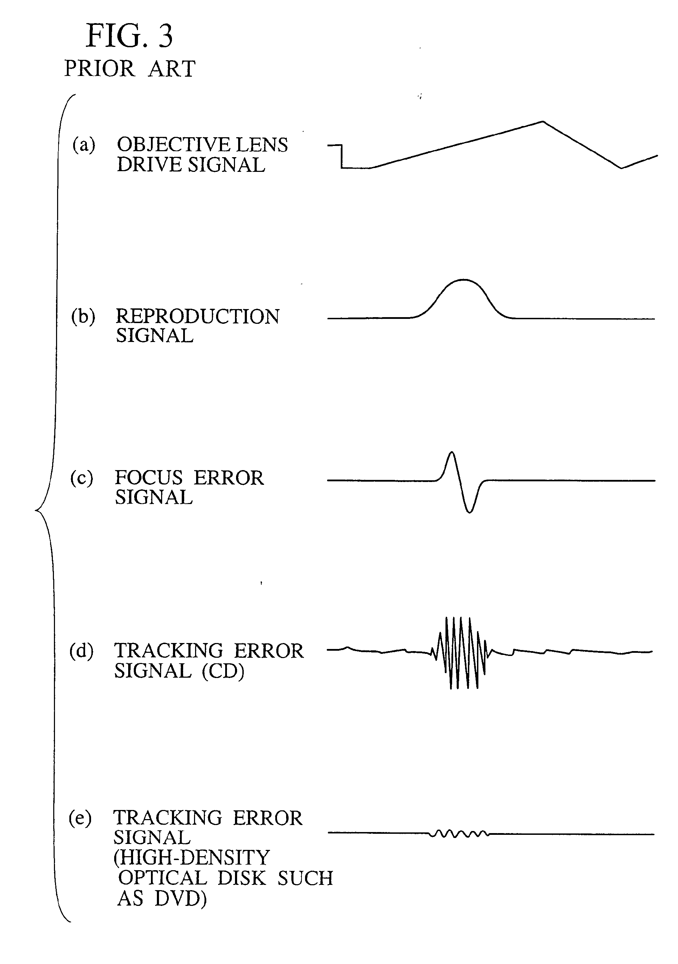

FIG.2 is a flowchart showing a conventional recording medium distinction method. Moreover, FIG.3 is a signal waveform diagram for use in explaining the conventional recording medium distinction method.

The conventional recording medium distinction method shown in FIGS.2 and 3 is described in the Japanese Patent Application Laid-Open No.11-250558/1999. Here, only a main point will be described with reference to the publication. Additionally, refer to the Japanese Patent Application Laid-Open No.11-250558/1999 for details.

In FIG.2, in step S101, for example, a laser diode LD for the compact disc (CD) is turned ON. In step S102 focus driving is performed with respect to the objective lens as shown in (a) of FIG.3. In this state, in step S103 a low-frequency component of a reproduction signal is monitored as shown in (b) of FIG.3. Subsequently, it is judged in step S104 whether or not a level of the low-frequency component of the reproduction signal is not less than a predetermined level (FOK = H). When the level of the low-frequency component of the reproduction signal is not less than the predetermined level, a focus error signal is obtained as shown in (c) of FIG.3. Furthermore, in step S105 a tracking error signal is measured as shown in (d) or (e) of FIG.3. It is judged in step S106 whether or not a peak-to-peak (PP) value of the tracking error (TE) signal is larger than a predetermined reference value. Additionally, when the peak-to-peak (PP) value of the tracking error (TE) signal is not larger than the reference value, in step S107 the optical disk is identified as a high density optical disk such as a digital video disk (DVD). On the other hand, when the value is larger than the reference value, the optical disk is identified as a compact disc (CD) in step S108.

Moreover, to distinguish a plurality of types of optical disks which have different track pitches, the above-described conventional recording medium distinction method comprises: irradiating the CD or DVD with a laser beam for playing the CD having a broad track pitch and controlling and gradually changing a focal point; measuring the level of the tracking error signal on a condition that the reproduction signal obtained by the return light reflected from the CD or DVD is within a predetermined range; and identifying the DVD having a track pitch smaller than that of the CD, when the peak-to-peak (PP) value of the tracking error signal is not more than the reference value. This method can be carried out, because as shown in FIGS.1A and 1B the working distance WD1 of the CD 10 and the working distance WD2 of the DVD 20 are each about 1 mm. While the objective lens OBL1 for the CD is focused, there is no danger that the objective lens OBL1 collides against the transparent disk substrate 11 of the CD 10 or the transparent disk substrate 21 of the DVD 20.

On the other hand, as described above, there is possibility that the extra high density optical disk 30 densified more highly than the DVD 20 appears in near future. With spread of the extra high density optical disk 30, there is high possibility that a new optical disk apparatus capable of recording and/or reproducing the CD 10 and/or DVD 20 and the extra high density optical disk 30 is brought on the market.

In this case, when the extra high density optical disk 30 is inserted in the new optical disk apparatus, it is impossible to identify the extra high density optical disk 30. Because a method of identifying the extra high density optical disk 30 is not included in the conventional recording medium distinction method described above. Moreover, when the CD 10 and/or DVD 20 is inserted in the new optical disk apparatus, and when the optical pickup (not shown) for the extra high density optical disk first operates, the objective lens OLB3 probably collides against the CD 10 or DVD 20. Because the working distance WD3 of the objective lens OLB3 disposed in the optical pickup for the extra high density optical disk is 0.5 mm or less as described with reference to FIG.1C. There is a danger that the CD 10 or DVD 20 is damaged.

Therefore, there has been a demand for a type distinction method of an optical disk in which the extra high density optical disk 30 can also be identified using the optical pickup for emitting a laser beam with a wavelength longer than that of the laser beam for irradiating the extra high density optical disk 30 in the new optical disk apparatus capable of recording and/or reproducing the information with respect to the CD 10 and/or DVD 20, and extra high density optical disk 30. There has also been a demand for an optical disk apparatus in which the method is used.

### SUMMARY OF THE INVENTION

The present invention has been developed in consideration of the above-described problems, and an object thereof is to provide a type distinction method of an optical disk in which an extra high density optical disk can also be identified using an optical pickup for emitting a laser beam with a wavelength longer than that of the laser beam for irradiating the extra high density optical disk in a new optical disk apparatus capable of recording and/or reproducing information with respect to a CD and/or DVD, and extra high density optical disk. Another object is to provide an optical disk apparatus in which the method is used.

To achieve the above-described objects, there is provided a type distinction method of an optical disk, comprising the steps of: irradiating an attached optical disk with a laser beam from a semiconductor laser disposed in an optical pickup via an objective lens; and identifying a type of the attached optical disk based on a return light from a signal surface thereof in an optical disk apparatus constituted such that an existing optical disk, and an extra high density optical disk capable of recording and/or reproducing an information signal with an extra high density as compared with the existing optical disk are selectively attachable. The method further comprises the steps of: using the optical pickup for the existing optical disk, which emits the laser beam with a wavelength longer than a wavelength of the laser beam for irradiating the extra high density optical disk, to identify the type of the attached optical disk; and starting the optical pickup for the extra high density optical disk, only when the attached optical disk is judged to be the extra high density optical disk.

In a preferred embodiment of the present invention, the step of identifying the type of the attached optical disk includes the steps of: emitting the laser beam from the optical pickup for the existing optical disk; detecting a focus error signal based on the return light from the signal surface; and judging the attached optical disk to be the extra high density optical disk, when an amplitude of the focus error signal is not more than a predetermined value.

In the preferred embodiment of the present invention, the existing optical disk includes a compact disc (CD) and digital versatile disc (DVD), and the laser beam emitted from the optical pickup for the existing optical disk is the laser beam for the CD or DVD.

In the preferred embodiment of the present invention, the step of identifying the type of the attached optical disk includes the steps of: emitting the laser beam for the CD or DVD; detecting a tracking error signal based on the return light from the signal surface when the attached optical disk is judged to be said existing optical disk; and judging the attached optical disk to be the CD or DVD corresponding to the emitted laser beam, when the amplitude of the tracking error signal is not less than another predetermined value.

Moreover, there is provided an optical disk apparatus to which an existing optical disk, and an extra high density optical disk capable of recording and/or reproducing an information signal with an extra high density as compared with the existing optical disk are selectively attachable and in which the attached optical disk is irradiated with a laser beam from a semiconductor laser disposed in an optical pickup via an objective lens, and a type of the attached optical disk is identified based on a return light from a signal surface thereof, the apparatus comprising: the optical pickup for the existing optical disk, which emits the laser beam with a wavelength longer than a wavelength of the laser beam for irradiating the extra high density optical disk; the optical pickup for the extra high density optical disk; distinction means for identifying the type of the attached optical disk using the optical pickup for the existing optical disk; and control means for starting the optical pickup for the extra high density optical disk, only when the distinction means judges the attached optical disk to be the extra high density optical disk.

In a preferred embodiment of the present invention, the optical pickup for the existing optical disk emits the laser beam, and the distinction means detects a focus error signal from the return light from the signal surface, and judges the attached optical disk to be the extra high density optical disk when an amplitude of the focus error signal is not more than a predetermined value.

In the preferred embodiment of the present invention, the existing optical disk includes a compact disc (CD) and digital versatile disc (DVD), and the laser beam emitted from the optical pickup for the existing optical disk is the laser beam for the CD or DVD.

In the preferred embodiment of the present invention, the optical pickup for the existing optical disk emits the laser beam for the CD or DVD, and the distinction means detects a tracking error signal based on the return light from the signal surface when the attached optical disk is judged to be the existing optical disk, and then judges the attached optical disk to be the CD or DVD corresponding to the emitted laser beam when an amplitude of the tracking error signal is not less than another predetermined value.

The nature, principle and utility of the invention will become more apparent from the following detailed description when read in conjunction with the accompanying drawings.

### BRIEF DESCRIPTION OF THE DRAWINGS

In the accompanying drawings:
FIGS.1A to 1C are diagrams schematically showing that a CD, DVD, and extra high density optical disk are played in an optical disk apparatus;
FIG.2 is a flowchart showing a conventional recording medium distinction method;
FIG.3 is a signal waveform diagram showing the conventional recording medium distinction method;
FIG.4 is a block diagram showing a type distinction method of an optical disk and an optical disk apparatus in which the method is used according to a first embodiment of the present invention;
FIG.5A is an enlarged view showing optical pickups for the CD/DVD and for the extra high density optical disk shown in FIG.4;
FIG.5B is a diagram showing a four-divided photodetector in each optical pickup;
FIG.6 is a flowchart showing a type distinction operation of the optical disk using a first laser beam for the CD as an initial setting in the first embodiment;
FIG.7 shows diagrams of waveforms of a first focus error signal using the first laser beam for the CD as the initial setting in the first embodiment, in which (a) shows that the CD is played, (b) shows that the DVD is played, and (c) shows that the extra high density optical disk is played;
FIG.8 shows diagrams of waveforms of a first tracking error signal using the first laser beam for the CD as the initial setting in the first embodiment, in which (a) shows that the CD is played, and (b) shows that the DVD is played;
FIG.9 is a flowchart showing the type distinction operation of the optical disk using a second laser beam for the DVD as the initial setting in the first embodiment;
FIG.10 shows diagrams of waveforms of a second focus error signal using the second laser beam for the DVD as the initial setting in the first embodiment, in which (a) shows that the CD is played, (b) shows that the DVD is played, and (c) shows that the extra high density optical disk is played;
FIG. 11 shows diagrams of waveforms of a second tracking error signal using the second laser beam for the DVD as the initial setting in the first embodiment, in which (a) shows that the CD is played, and (b) shows that the DVD is played;
FIG.12 is a block diagram showing the type distinction method of the optical disk and the optical disk apparatus in which the method is used according to a second embodiment of the present invention;
FIG. 13A is an enlarged view showing the optical pickups for the CD and for the DVD/extra high density optical disk shown in FIG.12;
FIG.13B is a diagram showing the four-divided photodetector in each optical pickup;
FIG.14 is a flowchart showing the type distinction operation of the optical disk using the first laser beam for the CD as the initial setting in the second embodiment; and
FIG.15 is a flowchart showing the type distinction operation of the optical disk using the second laser beam for the DVD as the initial setting in the second embodiment.

### DESCRIPTION OF THE PREFERRED EMBODIMENTS

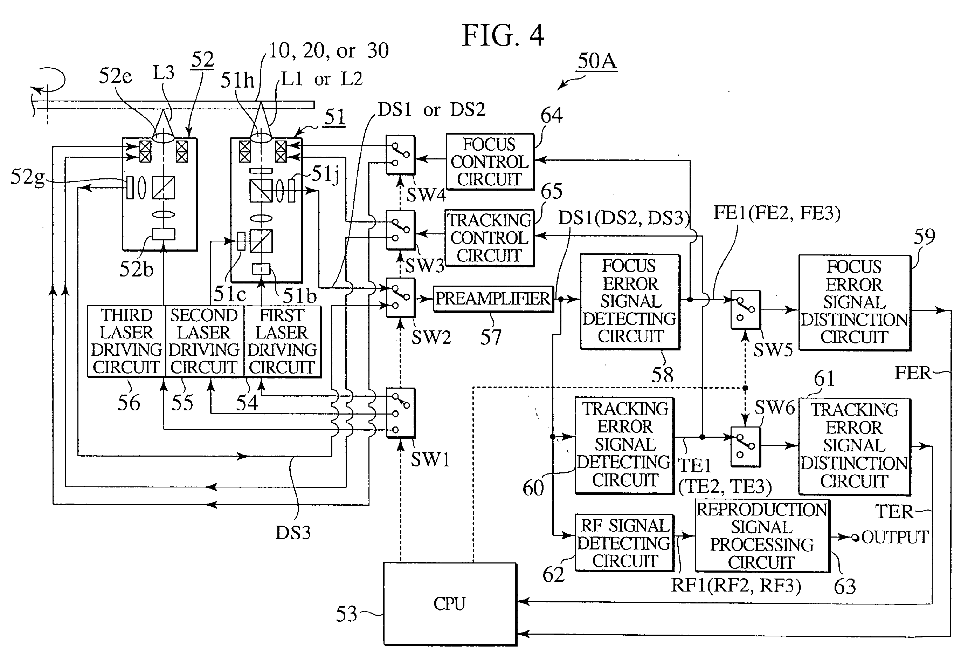

Embodiments of a type distinction method of an optical disk and an optical disk apparatus in which the method is used according to the present invention will be described hereinafter in detail in order of <First Embodiment>, <Second Embodiment> with reference to FIGS.4 to 15.

### <First Embodiment>

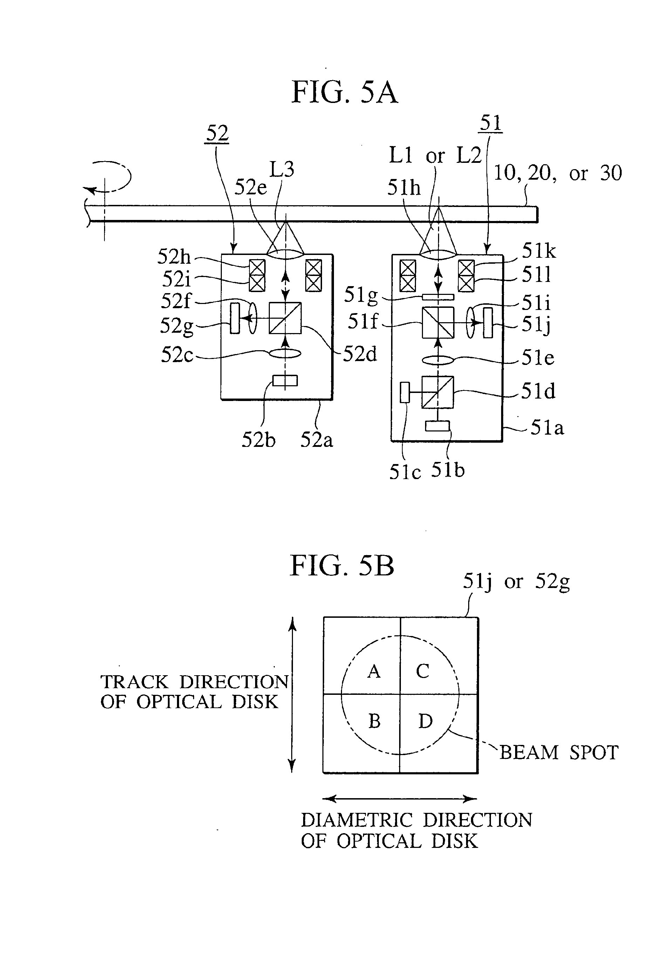

FIG.4 is a block diagram showing the type distinction method of the optical disk and the optical disk apparatus in which the method is used according to a first embodiment of the present invention. FIG.5A is an enlarged view showing optical pickups for CD/DVD and for an extra high density optical disk shown in FIG.4. FIG.5B is a diagram showing a four-divided photodetector in each optical pickup.

First, a constitution of the first embodiment of the optical disk apparatus according to the present invention will be described with reference to FIGS.4, 5A and 5B.

As shown in FIG.4, an optical disk apparatus 50A according to the first embodiment of the present invention is constituted such that a compact disc (CD) 10, digital versatile disc (DVD) 20, and extra high density optical disk 30 capable of recording/reproducing an information signal with an extra high density as compared with the CD 10 and/or DVD 20 described above with reference to FIGS.1A to 1C can selectively be attached. For type distinction of the optical disk, since the respective optical disks 10, 20, 30 are played and identified, constituting members on a recording side are omitted from FIG.4.

In the optical disk apparatus 50A of the first embodiment, the CD 10, DVD 20, or extra high density optical disk 30 is freely rotatably attached onto a turntable (not shown). For these optical disks 10, 20, 30, an optical pickup for the CD/DVD 51, and optical pickup for the extra high density optical disk 52 are disposed opposite to the respective optical disks 10, 20, 30 so that the pickups can freely move in diametric directions of the optical disks 10, 20, 30.

Additionally, in the following description, to record and/or play the CD 10, DVD 20, the optical pickup for the CD/DVD 51 is disposed, but this is not limited, and an optical pickup for the CD may be disposed separately from an optical pickup for the DVD.

For the optical pickup for the CD/DVD 51, as shown in FIG.5A in an enlarged manner, inside an optical pickup housing 51a there are disposed a first semiconductor laser for CD 51b, second semiconductor laser for DVD 51c. first beam splitter 51d, collimator lens 51e, second beam splitter 51f, filter for opening control 51g, objective lens 51h, receiver lens 51i, four-divided photodetector 51j, focus coil 51k, and tracking coil 511.

That is, for the first and second semiconductor lasers 51b, 51c disposed inside the optical pickup housing 51a, the first semiconductor laser 51b is disposed to emit a first laser beam with a wavelength of 780 nm for the CD. On the other hand, the second semiconductor laser 51c is disposed to emit a second laser beam with a wavelength of 635 nm for the DVD. In this case, either one of the first and second semiconductor lasers 51b and 51c is selected to emit the first or second laser beam. As an initial setting, the first or second semiconductor laser 51b, 51c is to first emit the laser beam in order to distinguish types of the respective optical disks 10, 20, 30. This is set beforehand by the optical disk apparatus 50A.

The first laser beam emitted from the first semiconductor laser 51b disposed in the optical pickup housing 51a of the optical pickup for the CD/DVD 51 is passed through a semitransparent film of the first beam splitter 51d and incident upon the collimator lens 51e. On the other hand, the second laser beam emitted from the second semiconductor laser 51c is reflected by the semitransparent film of the first beam splitter 51d and incident upon the collimator lens 51e.

Thereafter, the first or second laser beam is transformed to a parallel light by the collimator lens 51e, passed through the semitransparent film of the second beam splitter 51f, and incident upon the objective lens 51h via the filter for opening control 51g. To identify the type of the optical disk, the first or second laser beam L1, L2 focused by the objective lens 51h is emitted to the CD 10, DVD 20, or extra high density optical disk 30. In this case, a numerical aperture (NA) of the filter for opening control 51g with respect to the objective lens 51h is switched to NA = about 0.45 for the CD 10, or NA = about 0.6 for the DVD 20 using a liquid crystal (not shown). Moreover, when the first semiconductor laser 51b is driven, the filter for opening control 51g is switched to a CD 10 side as the initial setting. When the second semiconductor laser 51c is driven, the filter for opening control 51g is switched to a DVD 20 side as the initial setting. Also when the type of the optical disk is distinguished and the CD 10 or DVD 20 is identified, the filter is switched accordingly.

Furthermore, the first or second laser beam L1, L2 with which the CD 10, DVD 20, or extra high density optical disk 30 is irradiated is reflected by a metal reflective layer (not shown) formed on each of the optical disks 10, 20, 30. The returning first or second reflected light is passed through the objective lens 51h and filter for opening control 51g, reflected by the semitransparent film of the second beam splitter 51f, and incident upon the four-divided photodetector 51j via the receiver lens 51i. A first or second detected signal DS1, DS2 (FIG.4) obtained by photoelectrically converting the first or second reflected light is detected by the four-divided photodetector 51j.

In this case, as shown in FIG.5B, the four-divided photodetector 51j is formed substantially in a rectangular shape, and a light receiving area is divided into four by lines extending along diametric and track directions of the optical disk. To photoelectrically convert the reflected lights from the respective optical disks 10, 20, 30 which are formed into images on the four-divided photodetector 51j, areas A and B are formed on one side of the diametric direction of the optical disk, and areas C and D are formed on the other side of the diametric direction of the optical disk. Accordingly, the first or second detected signal DS1 or DS2 (FIG.4) including signals A to D corresponding to the areas A to D is detected with a beam spot formed into the image on the four-divided photodetector 51j by the reflected light.

Furthermore, the focus coil 51k for performing focus control of the objective lens 51h and the tracking coil 511 for performing tracking control of the objective lens 51h are disposed in the vicinity of the objective lens 51h.

When the first semiconductor laser for CD 51b is started by a first laser driving circuit 54 (FIG.4), the optical pickup for the CD/DVD 51 functions as the optical pickup for the CD. On the other hand, when the second semiconductor laser for DVD 51c is started by a second laser driving circuit 55 (FIG. 4), the optical pickup for the CD/DVD functions as the optical pickup for the DVD.

Next, for the optical pickup for the extra high density optical disk 52, as shown in FIG.5A in the enlarged manner, inside an optical pickup housing 52a there are disposed a third semiconductor laser for the extra high density optical disk 52b, collimator lens 52c, beam splitter 52d, objective lens 52e, receiver lens 52f, four-divided photodetector 52g, focus coil 52h, and tracking coil 52i.

That is, the third semiconductor laser 52b disposed inside the optical pickup housing 52a emits a third laser beam with a wavelength in the vicinity of 400 nm for the extra high density optical disk. In this case, firstly either one of the first and second semiconductor lasers 51b and 51c is used to distinguish the types of the respective optical disks 10, 20, 30. Then, as a result, only when the attached optical disk is judged to be the extra high density optical disk 30, the third semiconductor laser 52b is controlled to emit a third laser beam.

Then, the third laser beam emitted from the third semiconductor laser 52b disposed in the optical pickup housing 52a of the optical pickup for the extra high density optical disk 52 is transformed to the parallel light by the collimator lens 52c, thereafter passed through the semitransparent film of the beam splitter 52d, and incident upon the objective lens 52e which has a numerical aperture (NA) of 0.7 to 0.85. Only when the optical disk is judged to be the extra high density optical disk 30 during the type distinction, a third laser beam L3 focused by the objective lens 52e is emitted to the extra high density optical disk 30.

Furthermore, the third laser beam L3 with which the extra high density optical disk 30 is irradiated is reflected by the metal reflective layer (not shown) formed on the extra high density optical disk 30. The returning third reflected light is passed through the objective lens 52e, reflected by the semitransparent film of the beam splitter 52d, and incident upon the four-divided photodetector 52g via the receiver lens 52f. A third detected signal DS3 (FIG.4) obtained by photoelectrically converting the third reflected light is detected by the four-divided photodetector 52g. In this case, as shown in FIG.5B, the four-divided photodetector 52g is formed similarly as the above-described four-divided photodetector 51j.

Furthermore, the focus coil 52h for performing the focus control of the objective lens 52e and the tracking coil 52i for performing the tracking control of the objective lens 52e are disposed in the vicinity of the objective lens 52e.

Turning back to FIG.4, in the optical disk apparatus 50A of the first embodiment, a CPU 53 is disposed as control means for controlling the whole apparatus 50A, and the CPU 53 selectively controls first to sixth switches SW1 to SW6.

The first switch SW1 selectively switches the first laser driving circuit 54 for driving the first semiconductor laser 51b in the optical pickup for the CD/DVD 51, the second laser driving circuit 55 for driving the second semiconductor laser 51c in the optical pickup for the CD/DVD 51, and a third laser driving circuit 56 for driving the third semiconductor laser 52b in the optical pickup for the extra high density optical disk 52. In this case, as described above, in order to distinguish the types of the respective optical disks 10, 20, 30, as the initial setting, the first or second semiconductor laser 51b, 51c in the optical pickup for the CD/DVD 51 is first to be started. Accordingly, a driving order of the first and second laser driving circuits 54, 55 is controlled. Then, as a result, only when the optical pickup for the CD/DVD 51 identifies the extra high density optical disk 30, the third laser driving circuit 56 is driven.

Subsequently, the second switch SW2 switches the first or second detected signal DS1 or DS2 by the first or second reflected light outputted from the four-divided photodetector 51j in the optical pickup for the CD/DVD 51, or the third detected signal DS3 outputted from the four-divided photodetector 52g in the optical pickup for the extra high density optical disk 52. Any one of the switched first to third detected signals DS1 to DS3 is inputted into a preamplifier 57 and amplified by the preamplifier 57. Subsequently, any one of the first to third detected signals DS1 to DS3 amplified by the preamplifier 57 is branched and inputted into a focus error signal detecting circuit 58, tracking error signal detecting circuit 60, and RF signal detecting circuit 62.

Subsequently, the focus error signal detecting circuit 58 calculates {(A+D)-(B+C)} with respect to the signals A to D from the areas A to D shown in FIG.5B in one detected signal based on any one of the first to third detected signals DS1 to DS3 amplified by the preamplifier 57. Thereby, any one of first to third focus error signals FE1 to FE3 corresponding to the first to third detected signals DS1 to DS3 is obtained, and this focus error signal is branched and outputted to the fifth switch SW5 and a focus control circuit 64 described later.

Here, the fifth switch SW5 is turned ON by the CPU 53, only when the first or second semiconductor laser 51b or 51c in the optical pickup for the CD/DVD 51 operates. Therefore, the first or second focus error signal FE1 or FE2 is passed through the fifth switch SW5 and inputted into a focus error signal distinction circuit 59. On the other hand, when the third semiconductor laser 52b in the optical pickup for the extra high density optical disk 52 operates, the fifth switch SW5 is turned OFF, and therefore the third focus error signal FE3 is not inputted into the focus error signal distinction circuit 59.

When the first semiconductor laser 51b is first started as the initial setting, the focus error signal distinction circuit 59 detects a magnitude of level of the first focus error signal FE1. On the other hand, when the second semiconductor laser 51c is first started as the initial setting, the circuit detects the magnitude of level of the second focus error signal FE2. Thereby, in any case, the type of the optical disk is identified by the level of the first or second focus error signal FE1 or FE2, and an identified result FER is transmitted to the CPU 53. This series of operation will be described later.

Subsequently, in an example of a push-pull method for use in the CD or recordable DVD, the tracking error signal detecting circuit 60 calculates {(A+B)-(C+D)} with respect to the signals A to D from the areas A to D shown in FIG.5B in one detected signal based on any one of the first to third detected signals DS1 to DS3 amplified by the preamplifier 57. Thereby, any one of first to third tracking error signals TE1 to TE3 corresponding to the first to third detected signals DS1 to DS3 is obtained, and this tracking error signal is branched and outputted to the sixth switch SW6 and a tracking control circuit 65 described later.

Here, the sixth switch SW6 is also turned ON by the CPU 53, only when the first or second semiconductor laser 51b or 51c in the optical pickup for the CD/DVD 51 operates. Therefore, the first or second tracking error signal TE1 or TE2 is passed through the sixth switch SW6 and inputted into a tracking error distinction circuit 61. On the other hand, when the third semiconductor laser 52b in the optical pickup for the extra high density optical disk 52 operates, the sixth switch SW6 is turned OFF, and therefore the third tracking error signal TE3 is not inputted into the tracking error distinction circuit 61.

When the first semiconductor laser 51b is first started as the initial setting, the tracking error distinction circuit 61 detects the magnitude of level of the first tracking error signal TE1. On the other hand, when the second semiconductor laser 51c is first started as the initial setting, the circuit detects the magnitude of level of the second tracking error signal TE2. Thereby, in any case, the type of the optical disk is identified by the level of the first or second tracking error signal TE1 or TE2, and an identified result TER is transmitted to the CPU 53. This series of operation will also be described later.

Subsequently, the RF signal detecting circuit 62 calculates (A+B+C+D) with respect to the signals A to D from the areas A to D shown in FIG.5B in one detected signal based on any one of the first to third detected signals DS1 to DS3 amplified by the preamplifier 57. Thereby, any one of first to third RF signals RF1 to RF3 corresponding to the first to third detected signals DS1 to DS3 is obtained, and this RF signal is inputted into and processed by a reproduction signal processing circuit 63 according to a format of the optical disk. Thereafter, a reproduction signal is outputted.

Additionally, the focus and tracking error signals can be detected by various known methods such as a knife edge method, SSD method, push-pull method, and 3-beam method.

Moreover, the focus control circuit 64 is selectively connected to the focus coil 51k (FIG.5A) in the optical pickup for the CD/DVD 51 and the focus coil 52h (FIG.5A) in the optical pickup for the extra high density optical disk 52 via the fourth switch SW4 in a switchable manner. The fourth switch SW4 is switched in response to any one of the first to third focus error signals FE1 to FE3 outputted from the focus error signal detecting circuit 58. Thereby, the objective lens 51h in the optical pickup for the CD/DVD 51 and the objective lens 52e in the optical pickup for the extra high density optical disk 52 are subjected to the focus control for the corresponding optical disk.

Furthermore, the tracking control circuit 65 is selectively connected to the tracking coil 511 (FIG.5A) in the optical pickup for the CD/DVD 51 and the tracking coil 52i (FIG.5A) in the optical pickup for the extra high density optical disk 52 via the third switch SW3 in the switchable manner. The third switch SW3 is switched in response to any one of the first to third tracking error signals TE1 to TE3 outputted from the tracking error signal detecting circuit 60. Thereby, the objective lens 51h in the optical pickup for the CD/DVD 51 and the objective lens 52e in the optical pickup for the extra high density optical disk 52 are subjected to the tracking control for the corresponding optical disk.

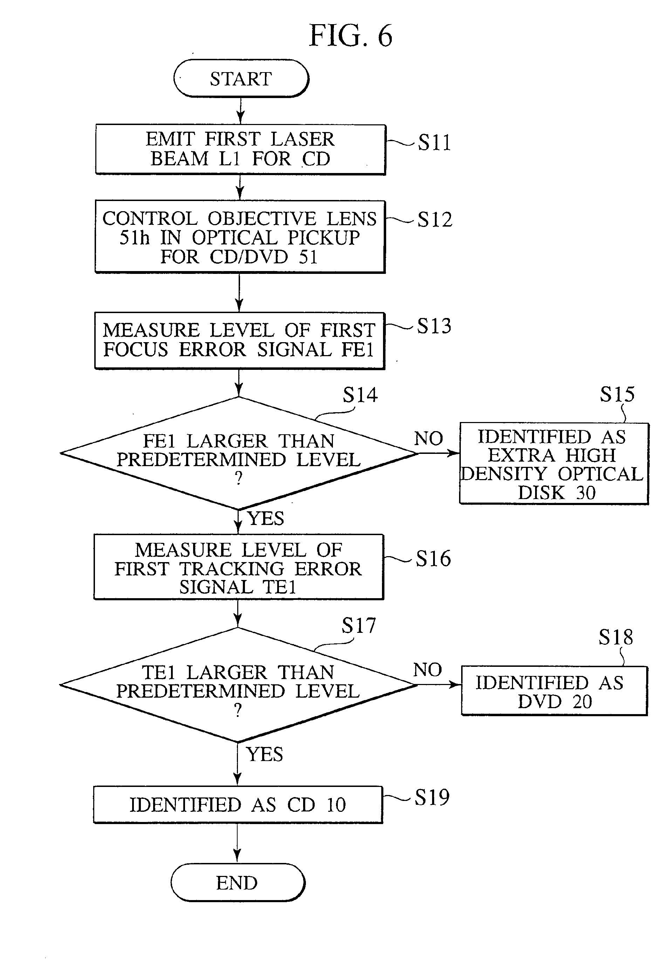

Here, a distinction operation for using the optical disk apparatus 50A constituted as described above according to the first embodiment of the present invention to distinguish the types of the CD 10, DVD 20, and extra high density optical disk 30 will be described with reference to FIGS.6 to 11.

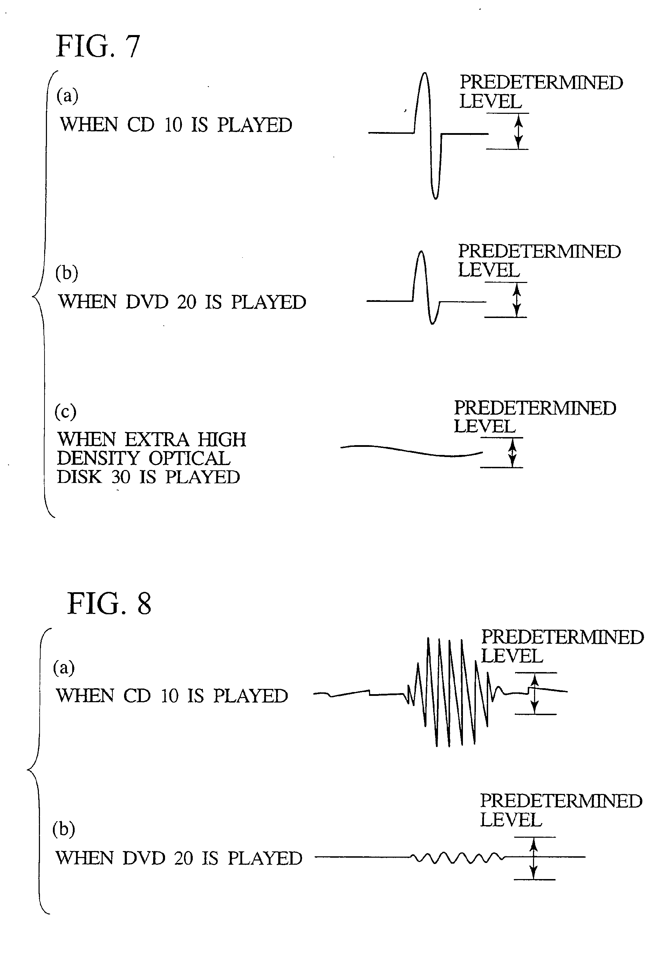

FIG.6 is a flowchart showing a type distinction operation of the optical disk using the first laser beam for the CD as the initial setting in the first embodiment. FIG.7 shows diagrams of waveforms of the first focus error signal using the first laser beam for the CD as the initial setting in the first embodiment, (a) therein shows that the CD is played, (b) shows that the DVD is played, and (c) shows that the extra high density optical disk is played. FIG.8 shows diagrams of waveforms of the first tracking error signal using the first laser beam for the CD as the initial setting in the first embodiment, (a) therein shows that the CD is played, and (b) shows that the DVD is played.

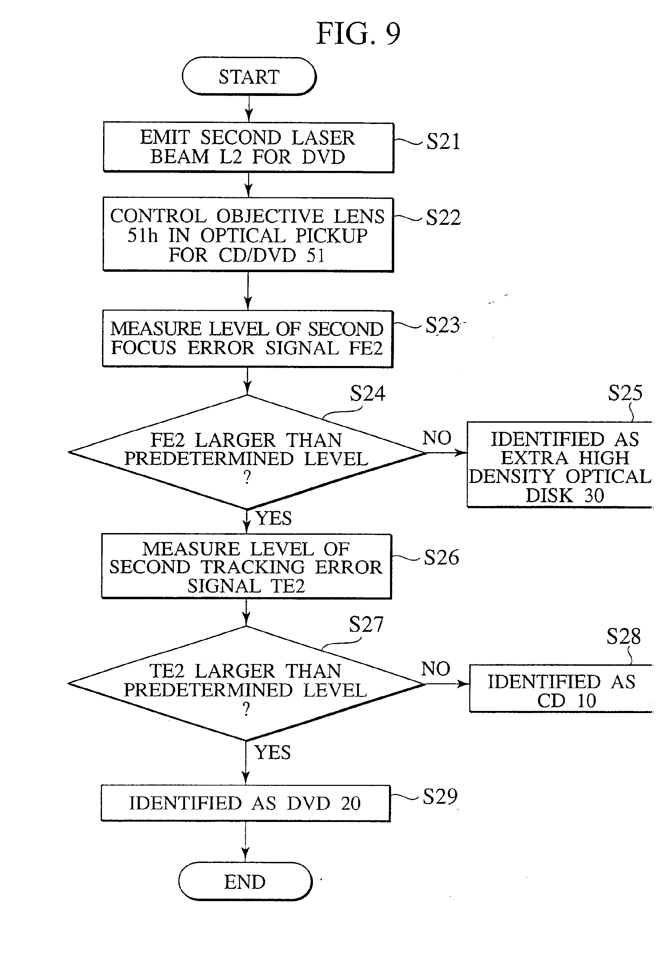

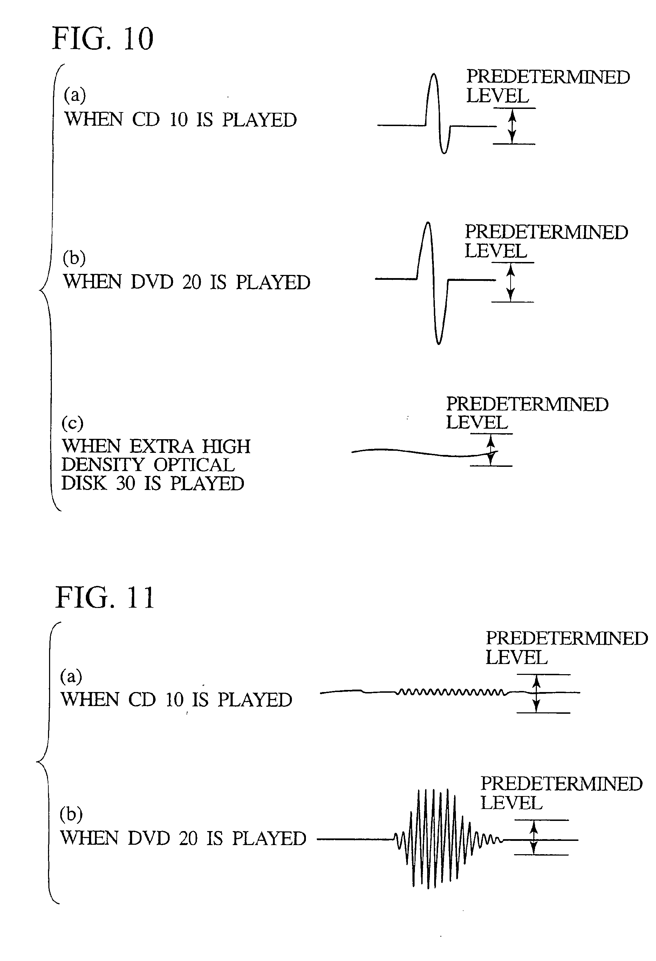

FIG.9 is a flowchart showing the type distinction operation of the optical disk using the second laser beam for the DVD as the initial setting in the first embodiment. FIG.10 shows diagrams of waveforms of the second focus error signal using the second laser beam for the DVD as the initial setting in the first embodiment, (a) therein shows that the CD is played, (b) shows that the DVD is played, and (c) shows that the extra high density optical disk is played. FIG.11 shows diagrams of waveforms of the second tracking error signal using the second laser beam for the DVD as the initial setting in the first embodiment, (a) therein shows that the CD is played, and (b) shows that the DVD is played.

In the optical disk apparatus 50A according to the first embodiment of the present invention, the type of the CD 10, DVD 20, or extra high density optical disk 30 is distinguished using the optical pickup. As described above in the related art, the working distance of the objective lens 52e in the optical pickup for the extra high density optical disk 52 is 0.5 mm or less with respect to the extra high density optical disk 30 as shown in FIG.1C. Therefore, when the optical pickup for the extra high density optical disk 52 is first started, there is danger that the CD 10, DVD 20 is damaged. Therefore, here, as the initial setting, either one of the first and second semiconductor lasers 51b, 51c for emitting the first or second laser beam with a wavelength longer than the wavelength of the third laser beam for irradiating the extra high density optical disk 30 is first started, and the type of the optical disk is identified.

First, when the first semiconductor laser 51b in the optical pickup for the CD/DVD 51 is started as the initial setting, as shown in FIG.6, in step S11 the first semiconductor laser 51b is started to irradiate the optical disk with the first laser beam L1 for the CD from the objective lens 51h.

In step S12, the objective lens 51h in the optical pickup for the CD/DVD 51 is subjected to the focus control with respect to the optical disk by the focus control circuit 64.

In step S13, the focus error signal distinction circuit 59 measures a peak-to-peak level (hereinafter referred to as "a level") of the first focus error signal FE1.

It is judged in step S14 whether or not the level of the first focus error signal FE1 measured by the focus error signal distinction circuit 59 is larger than a predetermined level. Here, the predetermined level stored in a memory (not shown) in the focus error signal distinction circuit 59 is set beforehand as follows. As shown in (a) and (b) of FIG.7, the level of the first focus error signal FE1 is larger than the predetermined level, when the CD 10 or DVD 20 is played. On the other hand, as shown in (c) of FIG.7, when the extra high density optical disk 30 is played; the level of the first focus error signal FE1 is smaller than the predetermined level.

Accordingly, when the level of the first focus error signal FE1 is judged to be smaller than the predetermined level in step S14, the focus error signal distinction circuit 59 judges the attached optical disk to be the extra high density optical disk 30 in step S15. When the focus error signal distinction circuit 59 informs the CPU 53 of the identification result, the CPU 53 changes the switch to the side of the optical pickup for the extra high density optical disk 52, and starts the third semiconductor laser for the extra high density optical disk 52b.

On the other hand, when the level of the first focus error signal FE1 is judged to be larger than the predetermined level in the step S14, in step S16 the tracking error signal distinction circuit 61 measures a peak-to-peak level (hereinafter referred to as "a level") of the first tracking error signal TE1.

It is judged in step S17 whether or not the level of the first tracking error signal TE1 measured by the tracking error signal distinction circuit 61 is larger than a predetermined level. Here, the predetermined level stored in the memory (not shown) in the tracking error signal distinction circuit 61 is set beforehand as follows. As shown in (a) of FIG.8, the level of the first tracking error signal TE1 is larger than the predetermined level, when the CD 10 is played. On the other hand, as shown in (b) of FIG.8, when the DVD 20 is played, the level of the first tracking error signal TE1 is smaller than the predetermined level.

Accordingly, when the level of the first tracking error signal TE1 is judged to be smaller than the predetermined level in step S16, the tracking error signal distinction circuit 61 judges the attached optical disk to be the DVD 20 in step S18. When the tracking error signal distinction circuit 61 informs the CPU 53 of the identification result, the CPU 53 changes the switch to the side of the second semiconductor laser 51c in the optical pickup for the CD/DVD 51, and starts the second semiconductor laser for DVD 51c.

On the other hand, when the level of the first tracking error signal TE1 is judged to be larger than the predetermined level in step S17, the tracking error signal distinction circuit 61 judges the attached optical disk to be the CD 10 in step S19. When the tracking error signal distinction circuit 61 informs the CPU 53 of the identification result, the CPU 53 continuously drives the first semiconductor laser for CD 51b in the optical pickup for the CD/DVD 51.

Next, when the second semiconductor laser 51c in the optical pickup for the CD/DVD 51 is started as the initial setting, as shown in FIG.9, in step S21 the second semiconductor laser 51c is started to irradiate the optical disk with the second laser beam L2 for the DVD from the objective lens 51h.

In step S22, the objective lens 51h in the optical pickup for the CD/DVD 51 is subjected to the focus control with respect to the optical disk by the focus control circuit 64.

In step S23, the focus error signal distinction circuit 59 measures a peak-to-peak level (hereinafter referred to as "a level") of the second focus error signal FE2.

It is judged in step S24 whether or not the level of the second focus error signal FE2 measured by the focus error signal distinction circuit 59 is larger than the predetermined level. Here, the predetermined level stored in the memory (not shown) in the focus error signal distinction circuit 59 is set beforehand as follows. As shown in (a) and (b) of FIG.10, the level of the second focus error signal FE2 is larger than the predetermined level, when the CD 10 or DVD 20 is played. On the other hand, as shown in (c) of FIG.10, when the extra high density optical disk 30 is played, the level of the second focus error signal FE2 is smaller than the predetermined level.

Accordingly, when the level of the second focus error signal FE2 is judged to be smaller than the predetermined level in the step S24, the focus error signal distinction circuit 59 judges the attached optical disk to be the extra high density optical disk 30 in step S25. When the focus error signal distinction circuit 59 informs the CPU 53 of the identification result, the CPU 53 changes the switch to the side of the optical pickup for the extra high density optical disk 52, and starts the third semiconductor laser for the extra high density optical disk 52b.

On the other hand, when the level of the second focus error signal FE2 is judged to be larger than the predetermined level in the step S24, in step S26 the tracking error signal distinction circuit 61 measures a peak-to-peak level (hereinafter referred to as "a level") of the second tracking error signal TE2.

It is judged in step S27 whether or not the level of the second tracking error signal TE2 measured by the tracking error signal distinction circuit 61 is larger than the predetermined level. Here, the predetermined level stored in the memory (not shown) in the tracking error signal distinction circuit 61 is set beforehand as follows. As shown in (a) of FIG.11, the level of the second tracking error signal TE2 is smaller than the predetermined level, when the CD 10 is played. On the other hand, as shown in (b) of FIG.11, when the DVD 20 is played, the level of the second tracking error signal TE2 is larger than the predetermined level.

Accordingly, when the level of the second tracking error signal TE2 is judged to be smaller than the predetermined level in the step S26, the tracking error signal distinction circuit 61 judges the attached optical disk to be the CD 10 in step S28. When the tracking error signal distinction circuit 61 informs the CPU 53 of the identification result, the CPU 53 changes the switch to the side of the first semiconductor laser 51b in the optical pickup for the CD/DVD 51, and starts the first semiconductor laser for CD 51b.

On the other hand, when the level of the second tracking error signal TE2 is judged to be larger than the predetermined level in step S27, the tracking error signal distinction circuit 61 judges the attached optical disk to be the DVD 20 in step S29. When the tracking error signal distinction circuit 61 informs the CPU 53 of the identification result, the CPU 53 continuously drives the second semiconductor laser for DVD 51c in the optical pickup for the CD/DVD 51.

As described above, when the type of the optical disk is identified, the optical pickup for the CD/DVD 51 for emitting the laser beam with a wavelength longer than that of the laser beam for irradiating the extra high density optical disk 30 is used, and either one of the first and second semiconductor lasers 51b, 51c in the optical pickup 51 is first started. When the level of either one of the first and second focus error signals is smaller than the predetermined level, the optical disk is identified as the extra high density optical disk 30. Therefore, only when the optical disk is identified as the extra high density optical disk 30, the third semiconductor laser for the extra high density optical disk 52b is started in the optical pickup for the extra high density optical disk 52. Thereby, since the objective lens 52e in the optical pickup 52 does not contact the CD 10 or DVD 20, the CD 10, DVD 20 is not damaged.

Additionally, the optical disk apparatus 50A of the first embodiment has been described including the optical pickup for the CD/DVD 51 and optical pickup for the extra high density optical disk 52. However, with the optical pickup 51 which emits the laser beam with a wavelength longer than the wavelength of the laser beam for irradiating the extra high density optical disk 30, when the level of the focus error signal is measured, and when the measured level the focus error signal is smaller than the predetermined level, the extra high density optical disk 30 can be identified.

### <Second Embodiment>

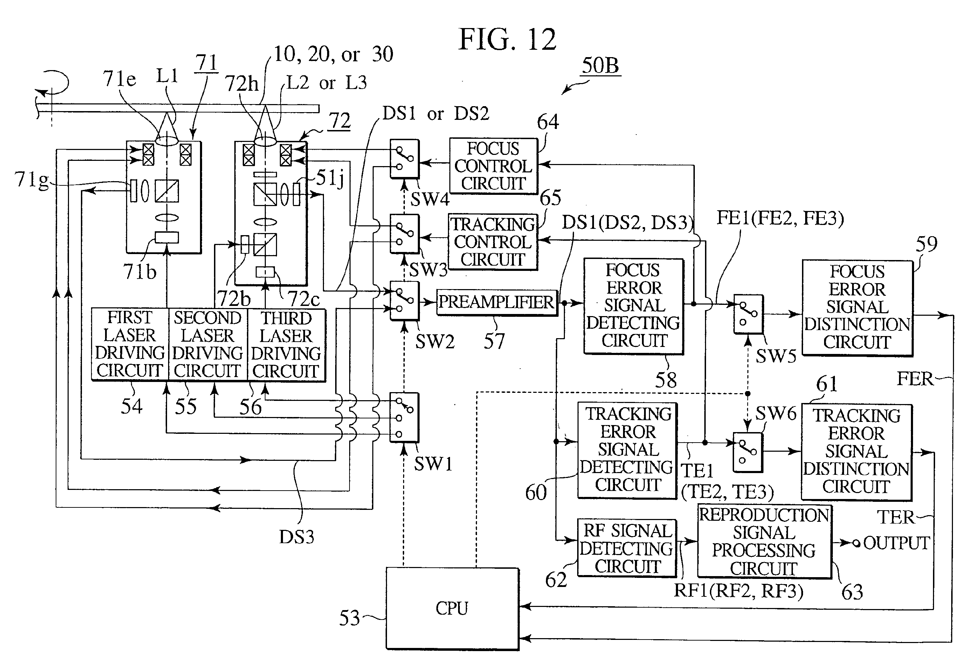

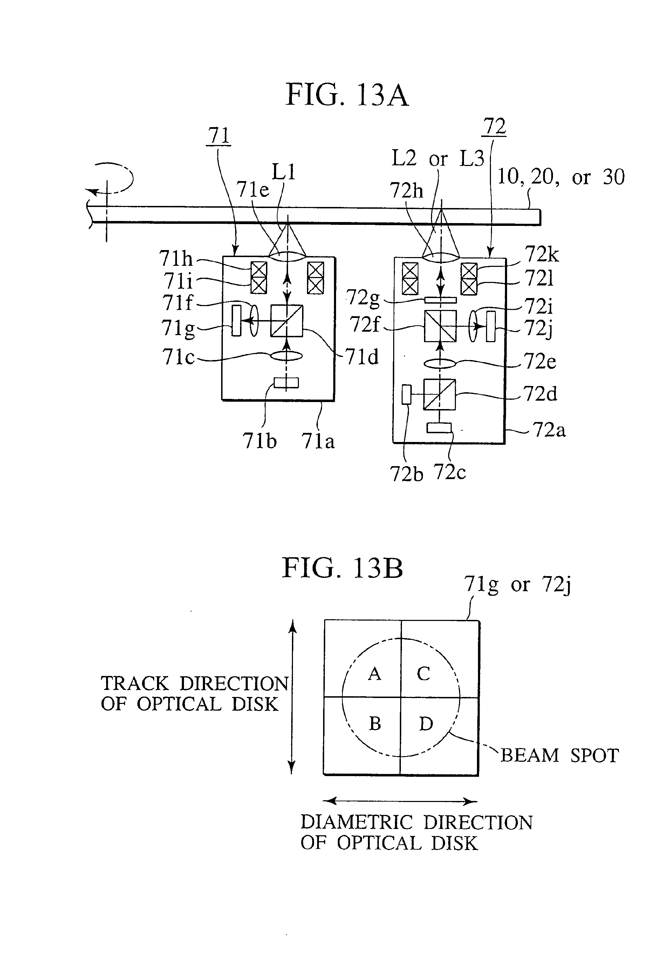

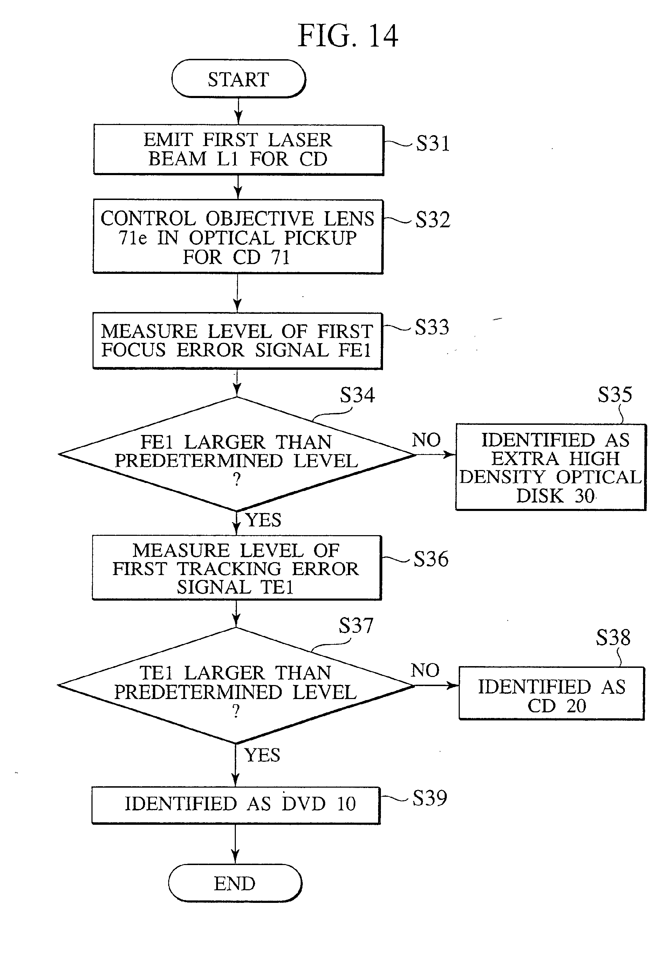

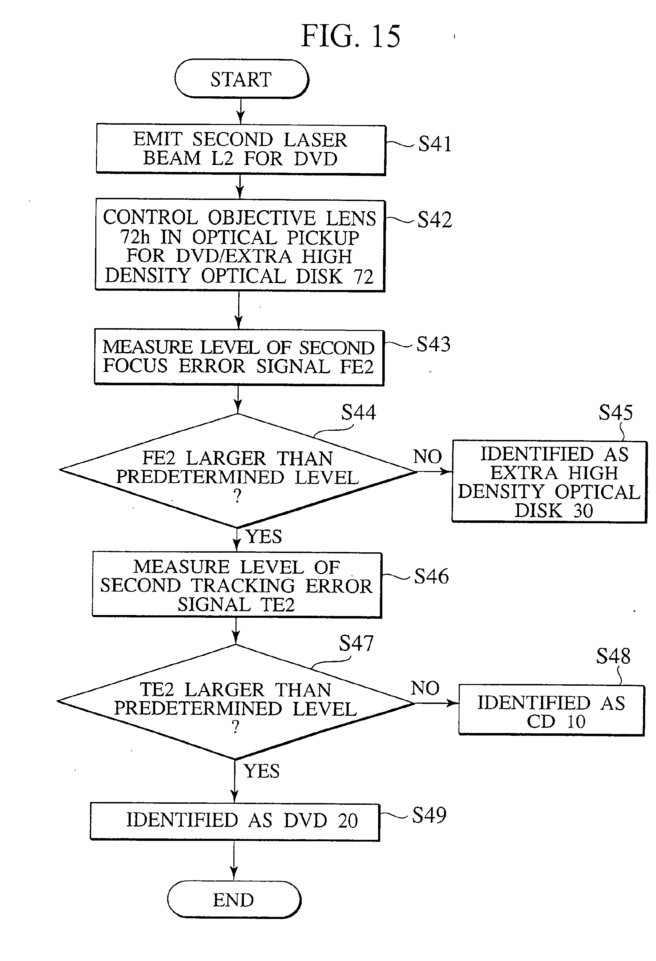

FIG.12 is a block diagram showing the type distinction method of the optical disk and the optical disk apparatus in which the method is used according to a second embodiment of the present invention. FIG.13A is an enlarged view showing the optical pickups for the CD and for the DVD/extra high density optical disk shown in FIG.12. FIG.13B is a diagram showing the four-divided photodetector in each optical pickup. FIG.14 is a flowchart showing the type distinction operation of the optical disk using the first laser beam for the CD as the initial setting in the second embodiment. FIG.15 is a flowchart showing the type distinction operation of the optical disk using the second laser beam for the DVD as the initial setting in the second embodiment.

An optical disk apparatus 50B according to the second embodiment of the present invention shown in FIG.12 is different from the optical disk apparatus 50A according to the first embodiment described above with reference to FIG.4 only in the constitution of the optical pickup. Here, for the sake of convenience of the description, the above-described constituting members are denoted with the same reference numerals, and appropriately described if necessary. Constituting members different from those of the first embodiment are denoted with new reference numerals and described.

As shown in FIG.12, the optical disk apparatus 50B according to the second embodiment of the present invention is also constituted such that the compact disc (CD) 10, digital versatile disc (DVD) 20, and extra high density optical disk 30 capable of recording and/or reproducing the information signal with a density much higher than that of the CD 10 and/or DVD 20 can selectively be attached.

The second embodiment is different from the first embodiment in that an optical pickup for CD 71 and optical pickup for DVD/extra high density optical disk 72 are disposed.

First, for the optical pickup for CD 71, as shown in FIG.13A in the enlarged manner, inside an optical pickup housing 71a there are disposed a first semiconductor laser for CD 71b which emits the first laser beam having a wavelength of 780 nm by the first laser driving circuit 54 (FIG.12), collimator lens 71c, beam splitter 71d, objective lens 71e, receiver lens 71f, four-divided photodetector 71g, focus coil 71h, and tracking coil 71i.

The first laser beam having a wavelength of 780 nm emitted from the first semiconductor laser 71b is transformed to the parallel light by the collimator lens 71c, then passed through the semitransparent film of the beam splitter 71d, and incident upon the objective lens 71e with a numerical aperture (NA) of 0.45. To identify the type of the optical disk, the first laser beam L1 focused by the objective lens 71e is emitted to the CD 10, DVD 20, or extra high density optical disk 30.

Furthermore, for the optical pickup for DVD/extra high density optical disk 72, as shown in FIG.13A in the enlarged manner, inside an optical pickup housing 72a there are disposed a second semiconductor laser for DVD 72b which emits the second laser beam having a wavelength of 635 nm by the second laser driving circuit 55 (FIG.12), third semiconductor laser for the extra high density optical disk 72c which emits the third laser beam whose wavelength is in the vicinity of 400 nm by the third laser driving circuit 56 (FIG.12), first beam splitter 72d, collimator lens 72e, second beam splitter 72f, filter for opening control 72g, objective lens 72h, receiver lens 72i, four-divided photodetector 72j, focus coil 72k, and tracking coil 721.

The second laser beam with a wavelength of 635 nm emitted from the second semiconductor laser 72b is reflected by the semitransparent film of the first beam splitter 72d and incident upon the collimator lens 72e. On the other hand, the third laser beam whose wavelength is in the vicinity of 400 nm is emitted from the third semiconductor laser 72c, passed through the semitransparent film of the first beam splitter 72d, and incident upon the collimator lens 72e.

Thereafter, the second or third laser beam is transformed to the parallel light by the collimator lens 72e, passed through the semitransparent film of the second beam splitter 72f, and incident upon the objective lens 72h via the filter for opening control 72g. To identify the type of the optical disk, the second or third laser beam L2, L3 focused by the objective lens 72h is emitted to the CD 10, DVD 20, or extra high density optical disk 30. In this case, the numerical aperture (NA) of the filter for opening control 72g with respect to the objective lens 72h is changed to NA = about 0.6 for the DVD 20, or NA = about 0.7 to 0.85 for the extra high density optical disk 30 using the liquid crystal (not shown). Moreover, when the second semiconductor laser 72b is driven, the filter for opening control 72g is switched to a DVD 20 side as the initial setting. When the type of the optical disk is distinguished and the extra high density optical disk 30 is identified, the filter is switched accordingly.

Therefore, the optical pickup for the DVD/extra high density optical disk 72 functions as the optical pickup for the DVD, when the second laser driving circuit 55 (FIG.12) starts the second semiconductor laser for DVD 72b. On the other hand, when the third laser driving circuit 56 (FIG.12) starts the third semiconductor laser for the extra high density optical disk 72c, the optical pickup functions for the extra high density optical disk.

Here, the type distinction method of the optical disk in the second embodiment will be described with reference to FIGS.12 to 15.

First, as shown in FIG.14, when the first semiconductor laser 71b in the optical pickup for CD 71 is assumed as the initial setting, in step S31 the first semiconductor laser 71b is started to irradiate the optical disk with the first laser beam L1 for the CD from the objective lens 71e.

In step S32, the objective lens 71e in the optical pickup for the CD 71 is subjected to the focus control with respect to the optical disk by the focus control circuit 64.

In step S33, the focus error signal distinction circuit 59 measures a peak-to-peak level (hereinafter referred to as "a level") of the first focus error signal FE1.

It is judged in step S34 whether or not the level of the first focus error signal FE1 measured by the focus error signal distinction circuit 59 is larger than a predetermined level.

When the level of the first focus error signal FE1 is judged to be smaller than the predetermined level in step S34, the focus error signal distinction circuit 59 judges the attached optical disk to be the extra high density optical disk 30 in step S35. When the focus error signal distinction circuit 59 informs the CPU 53 of the identification result, the CPU 53 switches to the side of the optical pickup for the DVD/extra high density optical disk 72, and starts the third semiconductor laser for the extra high density optical disk 72c.

On the other hand, when the level of the first focus error signal FE1 is judged to be larger than the predetermined level in the step S34, in step S36 the tracking error signal distinction circuit 61 measures a peak-to-peak level (hereinafter referred to as "a level") of the first tracking error signal TE1.

It is judged in step S37 whether or not the level of the first tracking error signal TE1 measured by the tracking error signal distinction circuit 61 is larger than a predetermined level.

When the level of the first tracking error signal TE1 is judged to be smaller than the predetermined level in step S36, the tracking error signal distinction circuit 61 judges the attached optical disk to be the DVD 20 in step S38. When the tracking error signal distinction circuit 61 informs the CPU 53 of the identification result, the CPU 53 switches to the side of the optical pickup for the DVD/extra high density optical disk 72, and starts the second semiconductor laser for DVD 72b.

On the other hand, when the level of the first tracking error signal TE1 is judged to be larger than the predetermined level in step S37, the tracking error signal distinction circuit 61 judges the attached optical disk to be the CD 10 in step S39. When the tracking error signal distinction circuit 61 informs the CPU 53 of the identification result, the CPU 53 continuously drives the first semiconductor laser for CD 71b in the optical pickup for the CD 71.

Next, when the second semiconductor laser 72b in the optical pickup for the DVD/extra high density optical disk 72 is assumed as the initial setting, as shown in FIG.15, in step S41 the second semiconductor laser 72b is started to irradiate the optical disk with the second laser beam L2 for the DVD from the objective lens 72h.

In step S42, the objective lens 72h in the optical pickup for the DVD/extra high density optical disk 72 is subjected to the focus control with respect to the optical disk by the focus control circuit 64.

In step S43, the focus error signal distinction circuit 59 measures a peak-to-peak level (hereinafter referred to as "a level") of the second focus error signal FE2.

It is judged in step S44 whether or not the level of the second focus error signal FE2 measured by the focus error signal distinction circuit 59 is larger than the predetermined level.

When the level of the second focus error signal FE2 is judged to be smaller than the predetermined level in the step S44, the focus error signal distinction circuit 59 judges the attached optical disk to be the extra high density optical disk 30 in step S45. When the focus error signal distinction circuit 59 informs the CPU 53 of the identification result, the CPU 53 switches to the side of the third semiconductor laser 72c in the optical pickup for the DVD/extra high density optical disk 72, and starts the third semiconductor laser for the extra high density optical disk 72c.

On the other hand, when the level of the second focus error signal FE2 is judged to be larger than the predetermined level in the step S44, in step S46 the tracking error signal distinction circuit 61 measures a peak-to-peak level (hereinafter referred to as "a level") of the second tracking error signal TE2.

It is judged in step S47 whether or not the level of the second tracking error signal TE2 measured by the tracking error signal distinction circuit 61 is larger than the predetermined level.

When the level of the second tracking error signal TE2 is judged to be smaller than the predetermined level in the step S46, the tracking error signal distinction circuit 61 judges the attached optical disk to be the CD 10 in step S48. When the tracking error signal distinction circuit 61 informs the CPU 53 of the identification result, the CPU 53 switches to the side of the optical pickup for the CD 71, and starts the first semiconductor laser for CD 71b.

On the other hand, when the level of the second tracking error signal TE2 is judged to be larger than the predetermined level in step S47, the tracking error signal distinction circuit 61 judges the attached optical disk to be the DVD 20 in step S49. When the tracking error signal distinction circuit 61 informs the CPU 53 of the identification result, the CPU 53 continuously drives the second semiconductor laser for DVD 72b in the optical pickup for the DVD/extra high density optical disk 72.

As described above, when the type of the optical disk is identified, the optical pickup for the CD 71, and the optical pickup for the DVD/extra high density optical disk 72 are used. Either one of the first semiconductor laser 71b in the optical pickup for CD 71 and the second semiconductor laser 72b in the optical pickup for the DVD/extra high density optical disk 72 is first started. When the level of either one of the first and second focus error signals is smaller than the predetermined level, the optical disk is identified as the extra high density optical disk 30. Therefore, only when the optical disk is identified as the extra high density optical disk 30, the third semiconductor laser for the extra high density optical disk 72c is started in the optical pickup for the DVD/extra high density optical disk 72. Thereby, the CD 10 or DVD 20 is not damaged.

Additionally, in the optical disk apparatus 50B of the second embodiment, the optical pickup for CD 71 is not disposed in some case. In this case, the second semiconductor laser for DVD 72b is first started in the optical pickup for the DVD/extra high density optical disk 72, so that the DVD 20 can be distinguished from the extra high density optical disk 30.

Furthermore, different from the first and second embodiments, in one optical pickup (not shown) there may be disposed a first semiconductor laser for CD, second semiconductor laser for DVD, and third semiconductor laser for the extra high density optical disk. This optical disk apparatus including three types of lasers is also considered. Also in this case, either one of the first and second semiconductor lasers is first started, and the above-described technical ideas of the first and second embodiments can be applied as such.

According to the type distinction method of the optical disk and the optical disk apparatus using the method according to the present invention described above in detail, particularly to identify the type of each optical disk using the optical pickup for the CD and/or DVD, which emits the laser beam with a wavelength longer than the wavelength of the laser beam for irradiating the extra high density optical disk, only when the attached optical disk is judged to be the extra high density optical disk, the optical pickup for the extra high density optical disk is started. Therefore, there is no danger that the objective lens disposed in the optical pickup for the extra high density optical disk collides against the optical disk such as the CD and/or DVD, and the optical disk such as the CD and/or DVD is not damaged.

It should be understood that many modifications and adaptations of the invention will become apparent to those skilled in the art and it is intended to encompass such obvious modifications and changes in the scope of the claims appended hereto.

## Claims

1. An optical disk type distinction method of: irradiating an attached optical disk with a laser beam (L1, L2, L3) from a semiconductor laser (51b, 51c, 52b; 71b, 72b, 72c) disposed in an optical pickup (51, 52; 71, 72) via an objective lens (51h, 52e; 71e, 72h); and identifying a type of the attached optical disk based on a return light from a signal surface thereof in an optical disk apparatus (50A; 50B) constituted such that an existing optical disk (10, 20), and an extra high density optical disk (30) capable of recording and/or reproducing an information signal with an extra high density as compared with the existing optical disk are selectively attachable, the method comprising the steps of:
using the optical pickup (51; 71 or 72) for said existing optical disk (10, 20), which emits the laser beam (L1, L2) with a wavelength longer than a wavelength of the laser beam (L3) for irradiating said extra high density optical disk (30), to identify the type of the attached optical disk; and
starting the optical pickup (52; 72) for the extra high density optical disk (30), only when the attached optical disk is judged to be said extra high density optical disk (30).

2. The optical disk type distinction method according to claim 1 wherein the step of identifying the type of the attached optical disk includes the steps of: emitting the laser beam (L1 or L2) from the optical pickup (51; 71 or 72) for said existing optical disk (10, 20); detecting a focus error signal (FE1) based on the return light from the signal surface; and judging the attached optical disk to be said extra high density optical disk (30), when an amplitude of the focus error signal (FE1) is not more than a predetermined value.

3. The optical disk type distinction method according to claim 2 wherein said existing optical disk (10, 20) includes a compact disc (CD) and digital versatile disc (DVD), and the laser beam (L1 or L2) emitted from the optical pickup (51; 71 or 72) for said existing optical disk (10, 20) is the laser beam for the CD or DVD.

4. The optical disk type distinction method according to claim 3 wherein the step of identifying the type of the attached optical disk includes the steps of: emitting the laser beam (L1 or L2) for the CD or DVD; detecting a tracking error signal (TE1) based on the return light from the signal surface when the attached optical disk is judged to be said existing optical disk (10 or 20); and judging the attached optical disk to be the CD or DVD corresponding to the emitted laser beam (L1 or L2) when an amplitude of the tracking error signal is not less than another predetermined value.

5. An optical disk apparatus (50A; 50B) to which an existing optical disk (10, 20), and an extra high density optical disk (30) capable of recording and/or reproducing an information signal with an extra high density as compared with the existing optical disk are selectively attachable and in which the attached optical disk is irradiated with a laser beam (L1, L2, L3) from a semiconductor laser (51b, 51c, 52b; 71b, 72b, 72c) disposed in an optical pickup (51, 52; 71, 72) via an objective lens (51h, 52e; 71e, 72h), and a type of the attached optical disk is identified based on a return light from a signal surface thereof, the apparatus (50A; 50B) comprising:
the optical pickup (51; 71 or 72) for said existing optical disk (10, 20), which emits the laser beam (L1, L2) with a wavelength longer than a wavelength of the laser beam (L3) for irradiating said extra high density optical disk (30);
the optical pickup (52; 72) for the extra high density optical disk (30);
distinction means (58, 59, 60, 61) for identifying the type of the attached optical disk using the optical pickup (51; 71 or 72) for said existing optical disk (10, 20); and
control means (53, SW1, 54, 55, 56) for starting the optical pickup (52; 72) for said extra high density optical disk (30), only when said distinction means judges the attached optical disk to be said extra high density optical disk (30).

6. The optical disk apparatus according to claim 5 wherein the optical pickup (51; 71 or 72) for said existing optical disk (10, 20) emits the laser beam (L1 or L2), and said distinction means (58, 59, 60, 61) detects a focus error signal (FE1) based on the return light from the signal surface, and judges the attached optical disk to be said extra high density optical disk (30) when an amplitude of the focus error signal (FE1) is not more than a predetermined value.

7. The optical disk apparatus according to claim 6 wherein said existing optical disk (10, 20) includes a compact disc (CD) and digital versatile disc (DVD), and the laser beam (L1 or L2) emitted from the optical pickup (51; 71 or 72) for said existing optical disk (10, 20) is the laser beam for the CD or DVD.

8. The optical disk apparatus according to claim 7 wherein the optical pickup (51; 71 or 72) for said existing optical disk (10, 20) emits the laser beam (L1 or L2) for the CD or DVD, and said distinction means (58, 59, 60, 61) detects a tracking error signal (TE1) based on the return light from the signal surface when the attached optical disk is judged to be said existing optical disk (10, 20), and then judges the attached optical disk to be the CD or DVD corresponding to the emitted laser beam (L1 or L2) when an amplitude of the tracking error signal (TE1) is not less than another predetermined value.
